# EUROPÄISCHE PATENTANMELDUNG

(11) **EP 1 988 484 A2**
(43) Veröffentlichungstag der Anmeldung: **05.11.2008**
(21) Anmeldenummer: 08102422.6
(22) Anmeldetag: 10.03.2008
(51) Int. Cl.: G06F 21/02

(54) **Gegen Kopieren geschützte Chipkarte und Verfahren im Zusammenhang mit deren Herstellung**

(30) Priorität: 29.03.2007 DE 102007015228; 30.03.2007 US 921098 P
(71) Anmelder: SIEMENS AKTIENGESELLSCHAFT, 80333 München (DE)
(72) Erfinder: Bungert, Michael, 82061 Neuried (DE); Hahn, Manfred, 83115 Neubeuern (DE); Heintel, Markus, 81375 München (DE)

(57) **Zusammenfassung**

Eine gegen kopieren geschützte Chipkarte (CC) mit einem Datenspeicher (DS) zur Speicherung von Daten, die zumindest in einem Teilbereich (SB) des Datenspeichers gegen eine Veränderung durch Anwender oder Angreifer außerhalb einer privilegierten Gruppe geschützt sind. Angehörige dieser Gruppe können einmalig ein für diese Chipkarte individuelles Kennzeichen (HW-ID) in diesen geschützten Speicherbereich (SB) und eine digitale Signatur (D-SIG) dieses Kennzeichens (HW-ID) in einen beliebigen Speicherbereich des Datenspeichers schreiben. Die digitale Signatur (D-SIG) kann mit Hilfe eines geheimen Schlüssels (S-KEY) erzeugt werden, zu dem ein zugehöriger öffentlicher Schlüssel (P-KEY) existiert, mit dem geprüft werden kann, ob die digitale Signatur (D-SIG) mit Hilfe eines geheimen Schlüssels (S-KEY) aus dem individuelles Kennzeichen (HW-ID) erzeugt wurde.

## Beschreibung

Die Erfindung betrifft eine Chipkarte mit einem Datenspeicher zur Speicherung von Daten, ein Verfahren zur Herstellung einer solchen Chipkarte, ein Verfahren zur Einrichtung eines Kopierschutzes für eine nach einem solchen Verfahren hergestellte Chipkarte und ein Verfahren zur Unterstützung der Echtheitsprüfung im Zusammenhang mit einer nach einem der vorgenannten Verfahren hergestellten oder eingerichteten Chipkarte.

Chipkarten spielen heute in vielen Bereichen des täglichen Lebens eine zentrale Rolle als Datenträger für sicherheitskritische Informationen im Zusammenhang mit Anwendungen wie dem Bezahlen, der Zugangskontrolle oder den anderen Anwendungen, wie z.B. der Patientenkarte, die auch als elektronische Gesundheitskarte bezeichnet wird. Weil diese Chipkarten sicherheitskritische Informationen tragen, ist es erforderlich, dass diese Chipkarten gegen ein Kopieren, d.h. gegen eine widerrechtliche Herstellung einer funktionsgleichen Kopie der rechtmäßig ausgegebenen Chipkarte geschützt werden. Ein solches widerrechtliches Kopieren wird auch umgangssprachlich als "Klonen" bezeichnet.

Der vorliegenden Erfindung liegt also die Aufgabe zugrunde, eine Lösung für dieses Problem anzugeben. Diese Aufgabe wird erfindungsgemäß durch eine Chipkarte nach einem der Vorrichtungsansprüche sowie durch ein Verfahren nach einem der Verfahrensansprüche gelöst.

Im weiteren wird die Erfindung anhand bevorzugter Ausführungsbeispiele mit Hilfe einer Figur beschrieben.

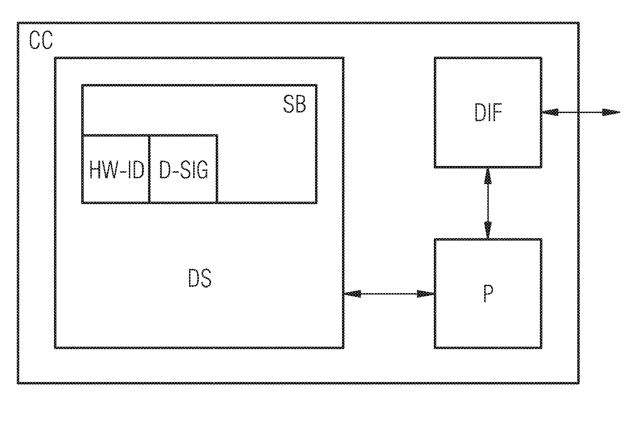

Dabei zeigt Figur 1 in schematischer Weise die wesentliche Architektur einer erfindungsgemäßen Chipkarte gemäß einem bevorzugten Ausführungsbeispiel.

Die in Figur 1 schematisch an einem Ausführungsbeispiel dargestellte erfindungsgemäße Chipkarte CC verfügt über einen Datenspeicher DS, der zumindest einen geschützten Bereich SB umfasst, in dem das erfindungsgemäße individuelle Kennzeichen (HW-ID) der Chipkarte und die digitale Signatur (D-SIG) dieses individuellen Kennzeichens gespeichert sind. Dabei ist es nicht unbedingt erforderlich, dass die Signatur des individuellen Kennzeichens in einem geschützten Speicherbereich SB der Chipkarte gespeichert ist. Je nach Anwendungsfall kann es vorteilhaft sein, für beide Daten separate Speicherbereiche vorzusehen, die auch technologisch unterschiedlich, beispielsweise als ROM, EPROM, etc., realisiert sein können, von denen nur der Speicherbereich in dem das individuelle Kennzeichen (HW-ID) der Chipkarte abgelegt ist, geschützt sein muss.

Unter einem geschützten Speicherbereich SB soll im Zusammenhang mit der vorliegenden Erfindung ein gegen eine Veränderung durch Anwender oder Angreifer außerhalb einer privilegierten Gruppe geschützter Speicherbereich verstanden werden. In diesen geschützten Speicherbereich können bestimmungsgemäß nur von Angehörigen der privilegierten Gruppe einmalig Daten geschrieben werden. Jeder Versuch durch Anwender oder Angreifer außerhalb dieser privilegierten Gruppe, schreibend oder irgendwie verändernd auf diesen geschützten Speicherbereich SB zuzugreifen, muss bestimmungsgemäß durch geeignete Maßnahmen verhindert werden.

Technisch lässt sich dieser Schutz des Speicherbereiches SB auf verschiedene Weisen realisieren:

In dem in Figur 1 dargestellten bevorzugten Anwendungsfall, in dem die Chipkarte auch über einen Prozessor P verfügt, der den Zugriff auf die auf der Chipkarte gespeicherten Daten über die Schnittstelle DEF steuernd beschränken kann, kann der Schutz des zu schützenden Speicherbereiches durch geeignete Maßnahmen in der für den Speicherzugriff zuständigen Programmlogik erreicht werden. Das den Speicherzugriff steuernde und beschränkende Programm ist normalerweise ein Teil des Chipkartenbetriebssystems, das sich normalerweise in einem Festspeicher ROM auf der Chipkarte befindet, und bei der Herstellung der Chipkarte unveränderlich in diesem Festspeicher abgelegt wird. Durch die Unveränderbarkeit dieses Programms ist bei geeigneter Wahl der Programmlogik sichergestellt, dass auf die zu schützenden Speicherbereiche SB, in denen die zu schützenden Daten abgelegt sind, nur von Angehörigen der privilegierten Gruppe beim erstmaligen Beschreiben dieser Bereiche zugegriffen werden kann. Danach ist jeder schreibende Zugriff auf die geschützten Bereiche unmöglich. Diese Art des Speicherschutzes könnte man als Softwareschutz bezeichnen.

In anderen Fällen, in denen die Chipkarte nicht über einen Prozessor verfügt, also eine reine Speicherkarte ist, scheidet diese Möglichkeit aus. Der Schutz der zu schützenden Speicherbereiche kann daher nur über technologische Maßnahmen der Speicherherstellung erreicht werden. Dem Fachmann ist eine Reihe von Speichertechnologien vertraut, mit denen sichergestellt werden kann, dass jedes Speicherelement eines solchen Speichers nur einmal, vorzugsweise beim Herstellungsprozess beschrieben werden kann, und dass jeder Versuch, ein zweites Mal Daten in die gleichen Speicherzellen zu schreiben, zur Zerstörung oder Unbrauchbarkeit der Speicherzellen führt.

Prinzipiell ist jede Speichertechnologie, die die genannten Forderungen erfüllt, zur Realisierung der Erfindung in dieser Ausführungsvariante geeignet.

Um die Sicherheit der ersten Ausführungsvariante mit dem Prozessor, der den Speicherzugriff regelt, noch zu erhöhen, kann die Beschränkung des Speicherzugriffs über die Software des Prozessors mit der Speichertechnologie kombiniert werden.

Eine bevorzugte Möglichkeit zur Erzeugung einer digitalen Signatur (D-SIG) des individuellen Kennzeichens (HW-ID) einer Chipkarte bedient sich der Hilfe eines geheimen Schlüssels (S-KEY), zu dem ein zugehöriger öffentlicher Schlüssel (P-KE) existiert, mit dem geprüft werden kann, ob die digitale Signatur D-SIG mit Hilfe eines geheimen Schlüssels S-KEY aus dem individuellen Kennzeichen (HW-ID) erzeugt wurde. Hierzu eignet sich prinzipiell jedes asymmetrische Kryptoverfahren, bei dem ein Schlüsselpaar verwendet wird, dessen öffentlicher Schlüssel nicht geheimhaltungsbedürftig ist.

Ein asymmetrisches Kryptosystem ist ein Kryptosystem, bei dem jeder der kommunizierenden Parteien ein Schlüsselpaar besitzt, das aus einem geheimen Teil (privater Schlüssel) und einem nicht geheimen Teil (öffentlicher Schlüssel) besteht. Der private Schlüssel ermöglicht es seinem Inhaber z.B., Daten zu entschlüsseln, digitale Signaturen zu erzeugen oder sich zu authentifizieren. Der öffentliche Schlüssel ermöglicht es jedermann, Daten für den Schlüsselinhaber zu verschlüsseln, dessen digitale Signaturen zu prüfen oder ihn zu authentifizieren. Im Gegensatz zu einem symmetrischen Kryptosystem müssen die kommunizierenden Parteien keinen gemeinsamen geheimen Schlüssel kennen. Asymmetrische Kryptosysteme werden daher auch als Public-Key-Verfahren bezeichnet.

Ein wichtiges Beispiel für ein asymmetrisches Kryptoverfahren ist das RSA-Verfahren, das sowohl zur Verschlüsselung als auch zur digitalen Signatur verwendet werden kann. Es verwendet ein Schlüsselpaar bestehend aus einem privaten Schlüssel, der zum Entschlüsseln oder Signieren von Daten verwendet wird, und einem öffentlichen Schlüssel, mit dem man verschlüsselt oder Signaturen prüft. Der private Schlüssel wird geheim gehalten und kann nicht oder nur mit extrem hohen Aufwand aus dem öffentlichen Schlüssel berechnet werden. RSA ist nach seinen Erfindern Ronald L. Rivest, Adi Shamir und Leonard Adleman benannt.

Dem Fachmann sind verschiedene asymmetrische Kryptoverfahren bekannt. Grundlagen hierzu finden sich beispielsweise in A. J. Menezes, P. C. van Oorschot, S. A. Vanstone, Handbook of Applied Cryptography, CRC Press, 1996.

Will nun ein Dritter prüfen, ob eine ihm vorgelegt Chipkarte, die gemäß der vorliegenden Erfindung gegen unerlaubtes Kopieren geschützt ist, echt ist oder nicht, so liest dieser Dritte das individuelle Kennzeichen HW-ID der Chipkarte und die auf ihr gespeicherte digitale Signatur D-SIG aus. Zur Prüfung der Echtheit beschafft er sich sodann den öffentlichen Schlüssel P-KEY, mit dem die digitale Signatur D-SIG erzeugt wurde. Durch Entschlüsseln der digitalen Signatur D-SIG mit Hilfe des öffentlichen Schlüssels P-KEY entsteht ein individuelles Kennzeichen HW-ID', das der Prüfende mit dem auf der Chipkarte gespeicherten individuellen Kennzeichen HW-ID vergleichen kann. Bei Übereinstimmung der beiden ist die Chipkarte echt, d.h. das individuelle Kennzeichen der Chipkarte HW-ID wurde mit Hilfe eines geheimen Schlüssels signiert, welcher zu dem öffentlichen Schlüssel, welchen der Prüfende verwendete, passt.

Da nur Angehörige der privilegierten Gruppen über den zur Erzeugung der auf der Chipkarte gespeicherten Signatur D-SIG verwendeten geheimen Schlüssel S-KEY verfügen können, kann die geprüfte Chipkarte nur von einem Angehörigen der privilegierten Gruppen signiert worden sein. Dies kann als Echtheitsbeweis angesehen werden.

Zur Prüfung der Echtheit ist also lediglich ein lesender Zugriff auf die Daten im gesicherten Speicherbereich der Chipkarte erforderlich. Zur Fälschung einer Chipkarte, d.h. zur Herstellung einer unerlaubten Kopie wäre hingegen ein schreibender Zugriff erforderlich, bei dem in den Speicher eines Chipkartenrohlings einfach vom Fälscher das individuelle Kennzeichen und die zugehörige Signatur einer echten Chipkarte eingeschrieben würden. Auf diese Weise könnte die Chipkarte verdoppelt werden, wenn ein schreibender Zugriff auf die entsprechenden Speicherbereiche möglich wäre. Dies wird aber gerade durch die weiter oben beschriebenen Sicherheitsvorkehrungen verhindert.

In vielen Anwendungsfällen ist es wünschenswert, dass die Signatur des individuellen Kennzeichens einer Chipkarte nicht von derselben Instanz vorgenommen wird, die auch das individuelle Kennzeichen auf der Chipkarte anbringt. Dies ist z.B. dann wünschenswert, wenn eine Chipkarte nicht nur gegen Kopieren geschützt, sondern mit Hilfe der Signatur auch einer abgeschlossenen Gruppe von Chipkarten zugeordnet können werden soll. Ein anderer derartiger Fall läge vor, wenn der Emittent der Chipkarte nicht nur das individuelle Kennzeichen HW-ID, sondern auch weitere Merkmale mit in die Signatur einfließen lassen möchte, z.B. Identifikationsmerkmale des Kartenherausgebers der Gruppe etc.

In diesen oder ähnlichen Fällen sollte es also möglich sein, dass das individuelle Kennzeichen HW-ID auf der Chipkarte vom Hersteller der Chipkarte angebracht, d.h. von diesem in den gesicherten Speicherbereich geschrieben wird. Die Signatur hingegen sollte in diesen Anwendungsfällen nicht vom Hersteller, sondern z.B. vom Chipkarten-Emittenten erzeugt und in einen Speicherbereich der Chipkarte geschrieben werden.

Auch hierfür bieten sich wieder verschiedene Realisierungsmöglichkeiten an, die im Rahmen der vorliegenden Beschreibung nur exemplarisch und nicht vollständig beschrieben werden können. Ein Chipkartenhersteller hat ohne weiteres die Möglichkeit, ein individuelles Kennzeichen HW-ID einer Chipkarte beim Herstellungsprozess des Speicherchips in einem recht frühen Stadium in den Speicher zu schreiben. Dies ist z.B. leicht möglich, wenn ein geschützter Speicherbereich als Festwertspeicher ausgeführt ist, der elektrisch oder über die Masken bei der Chip-Herstellung vom Hersteller einmalig programmiert werden kann. In diesem Fall ist es dem Chiphersteller leicht möglich, das individuelle Kennzeichen eines Chips bei oder nach der Herstellung des Festwertspeichers (ROM) direkt in diesen einzuprogrammieren.

Um die Sicherheit weiter zu erhöhen, könnte dieser Festwertspeicher, in dem das individuelle Kennzeichen des Chips gespeichert ist, getrennt von einem anderen gesicherten oder ungesicherten Speicherbereich SB' vorgesehen werden, in den später der Chipkartenherausgeber (der Emittent) die Signatur D-SIG schreiben kann. Auch dieser zweite gesicherte Speicherbereich SB', in den der Chipkartenherausgeber die Signatur schreiben kann, kann als elektrisch programmierbarer Festwertspeicher (E-PROM) ausgelegt werden. Wichtig ist dabei allerdings, dass zumindest in den Fällen, in denen der Zugriff auf den Speicher nicht durch einen Prozessor beschränkt und geregelt wird, ein erneuter schreibender Zugriff auf diesen Festwertspeicher nicht oder nur unter Zerstörung des Speichers möglich ist. Ein lesender Zugriff soll hingegen auch später immer möglich sein.

Weil bei einer Prüfung der Echtheit der Chipkarte zumindest in den Fällen, in denen die Signatur mit Hilfe eines geheimen Schlüssels erzeugt wurde, ein öffentlicher Schlüssel zur Prüfung erforderlich ist, ist es ferner vorteilhaft, wenn auf der erfindungsgemäßen Chipkarte in einem weiteren Speicherbereich eine Information darüber hinterlegt ist, wie der zur Prüfung der Echtheit der Chipkarte entschlossene Dritte den öffentlichen Schlüssel P-KEY beschaffen kann. Dies könnte z.B. ein Verweis (sog. "LINK") auf eine Netzwerkadresse sein, in welcher der öffentliche Schlüssel hinterlegt ist. Da dieser Schlüssel seinem Namen entsprechend öffentlich ist, besteht keinerlei Bedürfnis, diesen Schlüssel gegen lesende Zugriffe Dritter zu schützen.

## Patentansprüche

1. Chipkarte (CC) mit einem Datenspeicher (DS) zur Speicherung von Daten, wobei diese Daten zumindest in einem Teilbereich (SB) des Datenspeichers gegen eine Veränderung durch Anwender oder Angreifer außerhalb einer privilegierten Gruppe geschützt sind, wobei aber von Angehörigen dieser Gruppe einmalig Daten in diesen geschützten Speicherbereich (SB) geschrieben werden können,
**dadurch gekennzeichnet, dass**
in diesem geschützten Speicherbereich (SB) ein für diese Chipkarte individuelles Kennzeichen (HW-ID) und in einem beliebigen Bereich des Datenspeichers (DS) eine digitale Signatur (D-SIG) dieses Kennzeichens (HW-ID) und möglicherweise weiterer Daten gespeichert sind.

2. Chipkarte nach Anspruch 1,
**dadurch gekennzeichnet, dass** die digitale Signatur (D-SIG) mit Hilfe eines geheimen Schlüssels (S-KEY) erzeugt wurde, zu dem ein zugehöriger öffentlicher Schlüssel (P-KEY) existiert, mit dem geprüft werden kann, ob die digitale Signatur (D-SIG) mit Hilfe eines geheimen Schlüssels (S-KEY) aus dem individuelles Kennzeichen (HW-ID) erzeugt wurde.

3. Chipkarte nach einem der vorhergehenden Ansprüche, deren individuelles Kennzeichen (HW-ID) bei ihrer Herstellung unveränderbar in die Hardware programmiert wurde, und dessen digitale Signatur (D-SIG) dieses Kennzeichens (HW-ID) in einem der Herstellung nachgelagerten Schritt vom Emittenten der Chipkarte vor ihrer Ausgabe an den Benutzer in einen beliebigen Teilbereich des Datenspeichers (DS) gespeichert wurde.

4. Chipkarte nach einem der Ansprüche 2 oder 3, bei der neben der Signatur zusätzliche Daten in einem Speicherbereich der Chipkarte gespeichert sind, mit deren Hilfe Daten aufgefunden werden können, die zur Prüfung, ob die digitale Signatur (D-SIG) mit Hilfe eines geheimen Schlüssels (S-KEY) aus dem individuelles Kennzeichen (HW-ID) erzeugt wurde, benötigt werden oder diese Prüfung unterstützen.

5. Verfahren zur Herstellung einer Chipkarte, bei dem
a) ein für diese Chipkarte individuelles Kennzeichen (HW-ID) in einen geschützten Speicherbereich (SB) und
b) eine digitale Signatur (D-SIG) dieses Kennzeichens (HW-ID) und möglicherweise weiterer Daten in einen beliebigen Speicherbereich dieser Chipkarte geschrieben werden, wobei der geschützte Speicherbereich (SB) gegen eine Veränderung durch Anwender oder Angreifer außerhalb einer privilegierten Gruppe geschützt ist.

6. Verfahren nach Anspruch 5, bei dem die digitale Signatur (D-SIG) mit Hilfe eines geheimen Schlüssels (S-KEY) erzeugt wird, zu dem ein zugehöriger öffentlicher Schlüssel (P-KEY) existiert, mit dem geprüft werden kann, ob die digitale Signatur (D-SIG) mit Hilfe eines geheimen Schlüssels (S-KEY) aus dem individuelles Kennzeichen (HW-ID) erzeugt wurde.

7. Verfahren nach einem der Ansprüche 5 oder 6, bei dem das individuelle Kennzeichen (HW-ID) bei der Herstellung der Chipkarte unveränderbar in einen gegen eine Veränderung durch Anwender oder Angreifer außerhalb einer vom Emittenten privilegierten Gruppe geschützten Teilbereich (SB) des Datenspeichers wurde, und bei dem die digitale Signatur (D-SIG) dieses Kennzeichens (HW-ID) und möglicherweise weiterer Daten in einem der Herstellung nachgelagerten Schritt vom Emittenten der Chipkarte vor ihrer Ausgabe an den Benutzer in einen beliebigen Teilbereich des Datenspeichers gespeichert wurde.

8. Verfahren zur Einrichtung eines Kopierschutzes für eine nach einem der Ansprüche 5 bis 7 hergestellten Chipkarte, bei dem das individuelle Kennzeichen (HW-ID) bei der Herstellung der Chipkarte unveränderbar in einen gegen eine Veränderung durch Anwender oder Angreifer außerhalb einer vom Emittenten privilegierten Gruppe geschützten Teilbereich (SB) des Datenspeichers gespeichert wurde, und bei dem die digitale Signatur (D-SIG) dieses Kennzeichens (HW-ID) und möglicherweise weiterer Daten in einem der Herstellung nachgelagerten Schritt vom Emittenten der Chipkarte vor ihrer Ausgabe an den Benutzer in einen beliebigen Teilbereich des Datenspeichers gespeichert wird bzw werden.

9. Verfahren zur Unterstützung der Echtheitsprüfung im Zusammenhang mit einer nach einem der Ansprüche 5 bis 7 hergestellten Chipkarte nach Anspruch 8, bei dem neben der Signatur zusätzliche Daten in einem Speicherbereich der Chipkarte gespeichert werden, mit deren Hilfe Daten aufgefunden werden können, die zur Prüfung, ob die digitale Signatur (D-SIG) mit Hilfe eines geheimen Schlüssels (S-KEY) aus dem individuellen Kennzeichen (HW-ID) erzeugt wurde, benötigt werden oder diese Prüfung unterstützen.
